# EUROPÄISCHE PATENTSCHRIFT

(11) **EP 1 906 863 B1**
(45) Veröffentlichungstag und Bekanntmachung des Hinweises auf die Patenterteilung: **31.05.2017**
(21) Anmeldenummer: 06762048.4
(22) Anmeldetag: 14.06.2006
(51) Int. Cl.: B01F 15/02, A61C 9/00, B01F 15/04, B05C 17/005, B05C 17/01

(54) **VERFAHREN UND VORRICHTUNG ZUM ERZEUGEN EINER MEHRKOMPONENTENMASSE**
METHOD AND DEVICE FOR PRODUCING A MULTICOMPONENT COMPOUND
PROCÉDÉ ET DISPOSITIF POUR PRODUIRE UNE SUBSTANCE À PLUSIEURS CONSTITUANTS

(30) Priorität: 15.07.2005 DE 102005033261
(43) Veröffentlichungstag der Anmeldung: 09.04.2008
(73) Patentinhaber: Mühlbauer Technology GmbH, 22547 Hamburg (DE)
(72) Erfinder: MEYER, Sven, 21641 Apensen (DE); HÖHNK, Hans-Dieter, 21465 Reinbek (DE); WEIHRAUCH, Matthias, 25336 Klein Nordende (DE)
(74) Vertreter: Glawe, Delfs, Moll
(86) Internationale Anmeldenummer: PCT/EP2006/005735
(87) Internationale Veröffentlichungsnummer: WO 2007/009537

(56) Entgegenhaltungen:
- EP-A- 0 087 029
- DE-A1- 19 951 504
- US-A1- 2003 022 128

## Beschreibung

Die Erfindung betrifft ein Verfahren zum Erzeugen einer Mehrkomponentenmasse, insbesondere für Dentalzwecke, durch Auspressen ihrer Komponenten aus Kartuschen mit Hilfe von Kolben, und durch Mischen der Komponenten. Die Erfindung betrifft weiter eine Vorrichtung zum Ausführen des Verfahrens.

Bei der Herstellung von Mehrkomponentenmassen, insbesondere für Dentalzwecke, treten verschiedene Probleme auf. Einerseits müssen die Komponenten in genau dem richtigen Mischungsverhältnis in einen Mischer gepresst werden, wo sie vermischt werden und dann austreten können. Sollen die beiden Komponenten in gleichen Mengen verwendet werden, so könnten als Kartuschen Zylinder mit gleichen Durchmessern verwendet werden, wobei dann auch die Kolben mit gleicher Geschwindigkeit vorwärts bewegt werden, um die Komponenten auszupressen. Dies kann mit Hilfe eines einzigen Antriebs geschehen. Mit einer solchen Vorrichtung könnten auch Komponenten in einem anderen Verhältnis ausgepresst werden, wenn die Kartuschen bzw. Zylinder unterschiedliche Durchmesser haben. Eine bessere Anpassung an verschiedene Mischungsverhältnisse erhält man aber, wenn jeder der Kolben mit einem eigenen Antrieb versehen ist (DE 199 51 504 A1). Auf diese Weise kann das gewünschte Mischungsverhältnis erhalten werden, wenn die Kartuschen tatsächlich gefüllt sind bzw. die Kolben an den Komponenten anliegen, so dass dort keine Lufttasche vorhanden ist. Wenn in einer der Kartuschen eine solche Lufttasche vorhanden ist, so würde natürlich, wenn beide Antriebe in Betrieb gesetzt werden, zunächst nur aus einer Kartusche Material ausgetrieben werden, während in der anderen Kartusche zunächst die Luft komprimiert würde und entweicht, so dass kein Material oder auf jeden Fall viel zu wenig Material austritt. Auch für dieses Problem gibt es aber eine Lösung, die in einer gleichzeitig eingereichten Patentanmeldung offenbart und beansprucht wird. Weitere Vorrichtungen zum Mischen von Dentalmassen sind aus den Dokumenten EP 0 087 029 A1 und US 2003/0022128 A1 bekannt.

Bei all diesen Fällen tritt aber immer folgendes Problem auf. Wenn der Kolben gegen das Material gedrückt wird, findet eine schlagartige Druckerhöhung statt. Dies ist insbesondere der Fall, wenn der Kolben so lange mit erhöhter Geschwindigkeit bewegt wird, wie sich zwischen Kolben und auszubringendem Material noch Luft befindet. Eine Folge davon ist, dass am Anfang nicht das gewünschte Mischungsverhältnis erhalten wird.

Die Aufgabe der Erfindung besteht in der Schaffung eines Verfahrens und einer Vorrichtung der eingangs genannten Art, bei der auch in Fällen, bei denen der Kolben zunächst mit großer Geschwindigkeit bewegt wird, ein Auspressen unter anfänglich erhöhtem Druck vermieden wird.

Die erfindungsgemäße Lösung besteht darin, dass der Auspressvorgang bei Beginn desselben mit einem verringerten Druck erfolgt.

Bei einer vorteilhaften Ausführungsform wird der Lastzustand des Antriebsmotors des Kolbens oder der Kolben über seine Stromaufnahme gemessen. Wird ein Anstieg des Stroms und damit des Lastzustand festgestellt, so bedeutet dies, dass der Kolben das Material erreicht hat und sich keine Lufttasche mehr zwischen Material und Kolben befindet. Um den Auspressvorgang dann mit verringerten Druck zu beginnen, wird der Vorschub des Kolbens nicht nur angehalten, sondern der Kolben ein kleines Stück zurückgefahren. Erst dann beginnt der normale Vorschub, mit dem das Material ausgepresst werden soll. Auf diese Weise wird verhindert, dass der Kolben anfänglich mit der erhöhten Vorschubgeschwindigkeit auf das auszupressende Material einwirkt.

Bei einer anderen vorteilhaften Ausführungsform erfolgt die Bestimmung des Lastzustands mit mechanischen Mitteln. Zu diesem Zweck ist vorteilhafterweise der Kolben mit einer Antriebsstange über eine Feder verbunden. Diese Feder wird in dem Moment zusammengedrückt, wenn der Kolben das Material erreicht. Das Zusammendrücken der Feder kann dann außerhalb der Kartuschen dieser Ausführungsform dadurch festgestellt werden, dass die Kolbenstange durch die Antriebsstange nach außen ragt, so dass außerhalb der Kartusche festgestellt werden kann, dass die Kolbenstange sich nicht mehr oder nur noch sehr wenig bewegt, obwohl die Antriebstange noch angetrieben wird. Diese relative Verschiebung kann zum Beispiel durch einen Mikroschalter oder durch eine Lichtschranke festgestellt werden, so dass dann der Lastzustand festgestellt ist und der Kolben ein Stück zurückgefahren werden kann, um mit dem normalen Auspressen zu beginnen.

Letzteres ist aber in vielen Fällen gar nicht nötig. Bei dieser Ausführungsform erfolgt das Auspressen des Materials nämlich am Anfang gar nicht mit der vollen Kraft und Geschwindigkeit, da ja zunächst die Feder noch nachgibt. Dieser "Softstart" hat den Vorteil, dass das Ausbringen nicht schlagartig und gleich mit voller Kraft beginnt, was zu der zumindest am Anfang ungleichförmigen Mischung führen könnte.

Der Kolben kann auch als vom Antrieb getrenntes Element ausgebildet sein, das am auszupressenden Material anliegt. Wird der Antrieb an dieses herangefahren und berührt er diesen, so wird der Kolben aufgrund er Haftreibung an der Zylinderwand zunächst nicht bewegt. Es kann dann mit mechanischen oder optischen Mittel die Berührung detektiert werden, ohne dass schon ein Druck auf das Material ausgeübt wird.

Die Erfindung wird im Folgenden unter Bezugnahme auf die beigefügte Zeichnungen beschrieben, die schematisch vorteilhafte Ausführungsformen der Vorrichtung der Erfindung zeigen. Es zeigen:
Fig. 1 schematisch den Aufbau einer erfindungsgemäße Vorrichtung;
Fig. 2 eine Teilansicht einer anderen vorteilhaften Ausführungsform; und
Fig. 3 eine Teilansicht einer anderen, der Ausführungsform der Fig. 2 ähnlichen Ausführungsform.

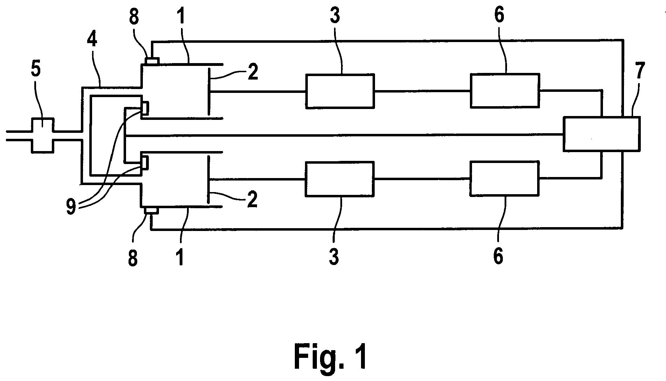

Die in Fig. 1 schematisch dargestellte Vorrichtung weist zwei Kartuschen oder Zylinder 1 auf, in denen sich jeweils eine Komponente befindet. In diesen Zylindern 1 sind Kolben 2 angeordnet, die über Antriebe 3 in die Zylinder 1 hineingedrückt werden, um das Material über Leitungen 4 in einen Mischer 5 zu fördern, wo die Komponenten vermischt werden und dann anschließend aus dem Mischer 5 austreten. Die Antriebe 3 werden über Einheiten 6 angetrieben, mit denen auch der Stromverbrauch der Antriebe 3 gemessen wird. Durch eine Steuerung 7 werden dabei die Vorschubgeschwindigkeiten der Kolben 2 so eingestellt, dass sie bei gefüllten Zylindern 1 konstante Werte einnehmen. Sind ein oder mehrerer der Zylinder 1 nur teilweise gefüllt, so wird die Vorschubgeschwindigkeit des entsprechenden Kolbens 2 erhöht, bis Lufttaschen beseitigt sind und der eigentliche Auspressvorgang beginnen kann. Das Auspressverhalten kann z. B. über Drucksensoren 8 festgestellt werden, die den Druck oder die Verformung der Zylinder 1 feststellen. Diese Signale können dann mit in der Einheit 7 berechneten oder gespeicherten Werten verglichen werden, um festzustellen, welche Komponenten sich in den Zylindern 1 befinden, um die für diese Komponenten optimalen Vorschubgeschwindigkeiten einzustellen. Bei 9 sind noch Einrichtungen angedeutet, mit denen die Entleerungspositionen der Kolben festgestellt werden können, damit die Kolben 2 mit erhöhter Geschwindigkeit zurückbewegt werden können, damit die Kartuschen 1 ausgewechselt werden können. Durch entsprechende Steuerung mit der Einheit 7 kann erfindungsgemäß der sogenannte "Softstart" durchgeführt werden. Wenn der erhöhte Lastzustand eines Kolbens festgestellt wird (beziehungsweise beider Kolben), wird dieser Kolben erst ein wenig zurückgefahren und erst dann mit dem Auspressen begonnen. Der Vorteil ist, dass das Auspressen nicht schlagartig beginnt, was in der Anfangsphase ein schlechtes Mischungsverhältnis bedeuten könnte.

Dieser "Softstart" ist natürlich auch bei Vorrichtungen möglich, die mehr als zwei Zylinder 1 aufweisen oder bei der alle Zylinder 1 durch einen gemeinsamen Antrieb 3 angetrieben werden.

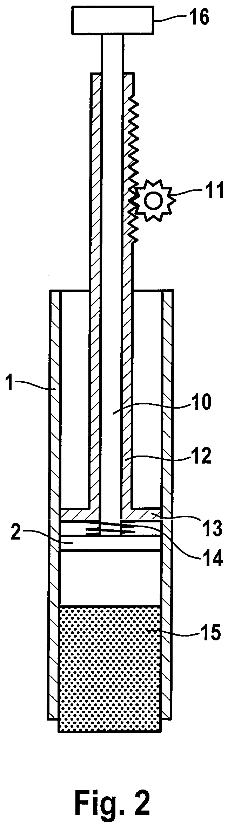

In Fig. 2 ist schematisch eine andere Ausführungsform dargestellt, und zwar nur eine Kartusche 1 mit einem Kolben 2, obwohl die erfindungsgemäße Vorrichtung selbstverständlich mehrere solcher Kartuschen 1 und Kolben 2 aufweist. Der Antrieb erfolgt hier nicht auf die Kolbenstange 10, sondern über ein mit einem nicht gezeigten Antrieb verbundenes Zahnrad 11 auf eine Antriebsstange 12, die im oberen Teil zahnstangenartig ausgebildet ist. In dieser Antriebsstange 12 ist die Kolbenstange 10 angeordnet und axial verschiebbar geführt. Zwischen einer unteren Erweiterung 13 der Stange und dem Kolben 2 befindet sich eine Druckfeder 14. Wird die Antriebsstange 12 durch das Antriebszahnrad 11 nach unten bewegt und erreicht der Kolben 2 das Material 15, so wird die Feder 14 zusammengedrückt. Die relative Verschiebung zwischen Antriebsstange 12 und Kolbenstange 10 kann dann durch eine Messeinrichtung 16 festgestellt werden, die außerhalb der Kartusche 1 angeordnet ist. Diese Messeinrichtung 16 kann eine Lichtschranke oder ein Mikroschalter sein. Aufgrund der Wirkung der Feder 14 kann so nicht nur der Lastzustand festgestellt werden. Es wird vielmehr auch ein "Softstart" erreicht, indem nicht gleich die volle Kraft auf das Material 15 wirkt.

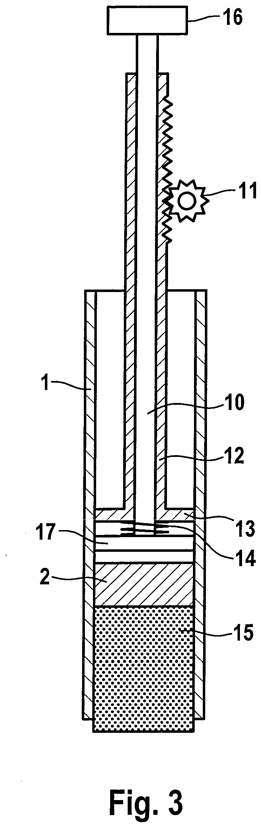

Fig. 3 zeigt einen Fall, bei dem im Unterschied zur Ausführungsform von Fig. 2 der Kolben 2 nicht mit dem Antrieb 3, 10, 12 13 direkt verbunden ist, aber am Material 15 anliegt. Bewegt sich der ein vom Antrieb angetriebenes Kraftübertragungselement 17 auf den Kolben 2 und berührt diesen, so wird der Kolben 2 zunächst aufgrund der Haftreibung an der Zylinderwand zunächst nicht verschoben und übt auch keinen Druck auf das Material 15 aus. Aufgrund der Haftreibung des Kolbens 2 an der Wand des Zylinders 1 wird aber die Feder 14 bereits zusammengedrückt. Es wird also der Beginn des Lastzustandes festgestellt, ohne dass schon Druck auf das Material 15 ausgeübt wird. Das Kraftübertragungselement 17 ist in Fig. 3 zwar kolbenförmig dargestellt, kann aber selbstverständlich auch andere Formen haben, die die Funktion der Kraftübertragung ermöglichen.

## Patentansprüche

1. Verfahren zum Erzeugen einer Mehrkomponentenmasse, insbesondere für Dentalzwecke, mittels einer Vorrichtung gemäß einem der Ansprüche 7 bis 14, durch Auspressen ihrer Komponenten aus Kartuschen (1) mit Hilfe von Kolben (2) und durch Mischen der Komponenten, **dadurch gekennzeichnet, dass** der Auspressvorgang bei Beginn desselben mit einem verringerten Druck erfolgt.

2. Verfahren nach Anspruch 1, **dadurch gekennzeichnet, dass** der Lastzustand des Antriebe (3) gemessen, bei Erhöhung des Lastzustands der Vortrieb beendet, der Kolben um eine kurze Strecke zurückgefahren und erst dann mit dem Vorschub für den normalen Auspressvorgang begonnen wird.

3. Verfahren nach Anspruch 2, **dadurch gekennzeichnet, dass** der Lastzustand des Antriebs (3) durch Messung der Stromaufnahme festgestellt wird.

4. Verfahren nach Anspruch 2, **dadurch gekennzeichnet, dass** der Lastzustand des Antriebs (3) mit mechanischen Mitteln bestimmt wird.

5. Verfahren nach einem der Ansprüche 1 bis 4, **dadurch gekennzeichnet, dass** die Regelung der Vorschubgeschwindigkeiten auf konstante Werte in Abhängigkeit vom Auspressverhalten der Komponenten erfolgt, das mit gespeicherten oder berechneten Werten für bekannte Materialien verglichen wird.

6. Verfahren nach einem der Ansprüche 1 bis 5, bei dem die Komponenten mit einem dynamischen Mischer nach dem Auspressen aus den Kartuschen gemischt werden, **dadurch gekennzeichnet, dass** der Mischer erst von dem Moment an angetrieben wird, zu dem ein oder mehrere Kolben den Lastzustand erreichen.

7. Vorrichtung zum Erzeugen einer Mehrkomponentenmasse, insbesondere für Dentalzwecke, die aufweist:
- Kartuschen (1) für jeweils eine Komponente der Mehrkomponentenmasse, die mit jeweils einem Kolben (2) versehen und *mit* einem Antrieb (3) zum Auspressen der Komponente *gekoppelt* sind, und
- einen Mischer (5) für die aus den Kartuschen ausgepressten Komponenten,
***dadurch gekennzeichnet, dass** sie mit Einrichtungen (6, 7) versehen ist, die eine verringerte Vorschubgeschwindigkeit bei Beginn des Auspressvorgangs bewirken*.

8. Vorrichtung nach Anspruch 7, **dadurch gekennzeichnet, dass** sie Mittel (6) zum Bestimmen des Lastzustands des Antriebs und Mittel (7) zum Verändern der Vorschubgeschwindigkeit *des Antriebs* aufweist.

9. *Vorrichtung nach Anspruch 8, **dadurch gekennzeichnet, dass** die Mittel (7) zum Verändern der Vorschubgeschwindigkeit des Antriebs so ausgebildet sind, dass bei Erhöhung des Lastzustandes der Vortrieb beendet, der Kolben um eine kurze Strecke zurückgefahren und erst dann mit dem Vorschub für den normalen Auspressvorgang begonnen wird.*

10. Vorrichtung nach Anspruch 8, **dadurch gekennzeichnet, dass** die Mittel (6) zum Bestimmen des Lastzustands des Antriebs Strommesseinrichtungen sind.

11. Vorrichtung nach Anspruch 8, **dadurch gekennzeichnet, dass** die Mittel (6) zum Bestimmen des Lastzustands Lichtschranken oder Mikroschalter zur Feststellung der mechanischen Stellung der Kolben (2) aufweisen.

12. Vorrichtung nach einem der Ansprüche 7 bis 11, **dadurch gekennzeichnet, dass** die Kolben (2) über jeweils eine Feder (14) mit einer Antriebsstange (12) verbunden sind.

13. Vorrichtung nach einem der Ansprüche 7 bis 11, **dadurch gekennzeichnet, dass** der Kolben (2) als ein vom Antrieb (3, 10, 12 13) getrenntes Element ausgebildet ist, an das der Antrieb herangefahren wird, wobei bei Berührung des Antriebs mit dem Kolben (2) ein Kraftübertragungselement (17) relativ zur Antriebsstange (12) verschoben wird.

14. Vorrichtung nach einem der Ansprüche 7 bis 13, **dadurch gekennzeichnet, dass** sie Einrichtungen (8) zum Feststellen des Auspressverhaltens der Komponenten aufweist.

## Claims

1. Method for producing a multicomponent compound, in particular for dental purposes, by means of a device according to one of Claims 7 to 14, by pressing its components out of cartridges (1) by means of pistons (2) and by mixing the components, **characterized in that** the pressing-out process, at the beginning thereof, takes place at a reduced pressure.

2. Method according to Claim 1, **characterized in that** the load state of the drive (3) is measured, in the event of an increase of the load state, the feed is ended, the piston is retracted a short distance and only then is the feed for the normal pressing-out process started.

3. Method according to Claim 2, **characterized in that** the load state of the drive (3) is detected by measuring the current consumption.

4. Method according to Claim 2, **characterized in that** the load state of the drive (3) is determined using mechanical means.

5. Method according to one of Claims 1 to 4, **characterized in that** the adjustment of the feed speeds to constant values takes place as a function of the pressing-out behavior of the components, which is compared with stored or calculated values for known materials.

6. Method according to one of Claims 1 to 5, in which the components are mixed with a dynamic mixer after being pressed out of the cartridges, **characterized in that** the mixer is driven first from the moment at which one or more pistons reach the load state.

7. Device for producing a multicomponent compound, in particular for dental purposes, which device has:
- cartridges (1) for in each case one component of the multicomponent compound, which cartridges are provided with in each case one piston (2) and are coupled to a drive (3) for pressing out the component, and
- a mixer (5) for the components pressed out of the cartridges,
**characterized in that** said device is provided with devices (6, 7) which bring about a reduced feed speed at the beginning of the pressing-out process.

8. Device according to Claim 7, **characterized in that** said device has means (6) for determining the load state of the drive and means (7) for changing the feed speed of the drive.

9. Device according to Claim 8, **characterized in that** the means (7) for changing the feed speed of the drive are designed such that, in the event of an increase of the load state, the feed is ended, the piston is retracted a short distance and only then is the feed for the normal pressing-out process started.

10. Device according to Claim 8, **characterized in that** the means (6) for determining the load state of the drive are current measuring devices.

11. Device according to Claim 8, **characterized in that** the means (6) for determining the load state are light barriers or microswitches for detecting the mechanical position of the pistons (2).

12. Device according to one of Claims 7 to 11, **characterized in that** the pistons (2) are connected by means of in each case one spring (14) to a drive rod (12).

13. Device according to one of Claims 7 to 11, **characterized in that** the piston (2) is embodied as an element which is separate from the drive (3, 10, 12, 13) and against which the drive is driven, wherein, when the drive comes into contact with the piston (2), a force transmission element (17) is moved relative to the drive rod (12).

14. Device according to one of Claims 7 to 13, **characterized in that** said device has apparatuses (8) for detecting the pressing-out behavior of the components.

## Revendications

1. Procédé pour produire une substance à plusieurs constituants, notamment à des fins dentaires, à l'aide d'un dispositif selon l'une quelconque des revendications 7 à 14, par expression de ses constituants hors de cartouches (1) à l'aide de pistons (2) et par mélange des constituants, **caractérisé en ce que** le processus d'expression s'effectue au début du mélange avec une pression réduite.

2. Procédé selon la revendication 1, **caractérisé en ce que** l'état de charge de l'entraînement (3) est mesuré, qu'en cas d'augmentation de l'état de charge, la pré-impulsion prend fin, que le piston repart en arrière sur un court tronçon et que la course avant ne commence qu'alors pour le processus d'expression normal.

3. Procédé selon la revendication 2, **caractérisé en ce que** l'état de charge de l'entraînement (3) est déterminé en mesurant le courant absorbé.

4. Procédé selon la revendication 2, **caractérisé en ce que** l'état de charge de l'entraînement (3) est défini avec des moyens mécaniques.

5. Procédé selon l'une quelconque des revendications 1 à 4, **caractérisé en ce que** le réglage des vitesses de course avant s'effectue à des valeurs constantes en fonction du comportement d'expression des constituants comparées aux valeurs mémorisées ou calculées pour des matériaux connus.

6. Procédé selon l'une quelconque des revendications 1 à 5, dans lequel les constituants sont mélangés à l'aide d'un mélangeur dynamique après l'expression hors des cartouches, **caractérisé en ce que** le mélangeur n'est entraîné qu'à partir du moment où un ou plusieurs pistons atteignent l'état de charge.

7. Dispositif pour produire une substance à plusieurs constituants, notamment à des fins dentaires, comportant :
- des cartouches (1) pour respectivement un constituant de la substance à plusieurs constituants respectivement pourvue d'un piston (2) et couplées à un entraînement (3) pour exprimer le constituant ; et
- un mélangeur (5) pour les constituants exprimés hors des cartouches ;
**caractérisé en ce qu'**il est pourvu de dispositifs (6, 7) provoquant une vitesse de course avant réduite au début du processus d'expression.

8. Dispositif selon la revendication 7, **caractérisé en ce qu'**il comporte des moyens (6) pour déterminer l'état de charge de l'entraînement et des moyens (7) de modification de la vitesse de course avant de l'entraînement.

9. Dispositif selon la revendication 8, **caractérisé en ce que** les moyens (7) de modification de la vitesse de course avant de l'entraînement sont réalisés de telle sorte qu'en cas d'augmentation de l'état de charge, la pré-impulsion prend fin, que le piston est ramené en arrière d'un court tronçon et que la course avant ne commence qu'alors pour le processus d'expression normal.

10. Dispositif selon la revendication 8, **caractérisé en ce que** les moyens (6) de détermination de l'état de charge de l'entraînement sont des dispositifs de mesure de courant.

11. Dispositif selon la revendication 8, **caractérisé en ce que** les moyens (6) de détermination de l'état de charge comportent la barrière lumineuse ou le microcontacteur pour déterminer la position mécanique des pistons (2).

12. Dispositif selon l'une quelconque des revendications 7 à 11, **caractérisé en ce que** les pistons (2) sont reliés via respectivement un ressort (14) avec une barre d'entraînement (12).

13. Dispositif selon l'une quelconque des revendications 7 à 11, **caractérisé en ce que** le piston (2) est réalisé sous la forme d'un élément séparé de l'entraînement (3, 10, 12, 13) auquel l'entraînement est amené, un élément de transmission de forme (17) étant poussé par rapport à la barre d'entraînement (12) en cas d'effleurement de l'entraînement avec le piston (2).

14. Dispositif selon l'une quelconque des revendications 7 à 13, **caractérisé en ce qu'**il comporte des dispositifs (8) de détermination du comportement d'expression des constituants.
